# EUROPEAN PATENT APPLICATION

(11) **EP 3 358 522 A1**
(43) Date of publication of application: **08.08.2018**
(21) Application number: 16863816.1
(22) Date of filing: 28.10.2016
(51) Int. Cl.: G06Q 50/30, G06Q 10/02, G08G 1/00

(54) **VEHICLE ALLOCATION CONTROL DEVICE AND VEHICLE**

(30) Priority: 13.11.2015 JP 2015223093
(71) Applicant: Panasonic Intellectual Property Management Co., Ltd., Osaka-shi, Osaka 540-6207 (JP)
(72) Inventor: HARADA, Tomoko, Osaka-shi, Osaka 540-6207 (JP)
(74) Representative: Eisenführ Speiser
(86) International application number: PCT/JP2016/004741
(87) International publication number: WO 2017/081849

(57) **Abstract**

An allocation controller creates a first combination by correlating constant vehicle information and variable vehicle information, creates a second combination by correlating the variable vehicle information and reservation information, and correlates the first combination and the second combination to control vehicle allocation to a subscriber. The constant vehicle information is defined as fixedly given to each of vehicles. The variable vehicle information is defined as variably given to each of the vehicles. The reservation information is defined as associated with the subscriber. A storage unit stores the first combination and the second combination created by the allocation controller. The allocation controller changes the vehicle allocation to the subscriber by revising one of the constant vehicle information and the variable vehicle information contained in the first combination stored in the storage unit to update the first combination while making no changes to the second combination stored in the storage unit.

## Description

### TECHNICAL FIELD

The present invention relates to a vehicle allocation control technique. In particular, the invention relates to an allocation control apparatus for vehicle allocation and to a vehicle.

### BACKGROUND ART

An autonomous driving device autonomously travels on public roads that are not furnished with driving lanes and other infrastructure to a destination while estimating the device position on these roads through sensors such as a global positioning system (GPS) or a laser scanner. It is desirable to enhance convenience for users of these autonomous driving devices. For that purpose, an autonomous driving device is equipped with display means that shows information for identification of an autonomous driving device coming to pick up or drop off a user, as disclosed in PTL 1.

### Citation List

### Patent Literature

PTL 1: WO 14/024254 A

### SUMMARY OF THE INVENTION

An allocation control apparatus according to an aspect of the present disclosure includes an allocation controller and a storage unit. The allocation controller creates a first combination by correlating constant vehicle information and variable vehicle information, creates a second combination by correlating the variable vehicle information and reservation information, and correlates the first combination and the second combination to control vehicle allocation to a subscriber. The constant vehicle information is defined as fixedly given to each of vehicles. The variable vehicle information is defined as variably given to each of the vehicles. The reservation information is defined as associated with the subscriber. The storage unit stores the first combination and the second combination created by the allocation controller. The allocation controller changes the vehicle allocation to the subscriber by revising one of the constant vehicle information and the variable vehicle information contained in the first combination stored in the storage unit to update the first combination while making no changes to the second combination stored in the storage unit.

Another aspect of the present disclosure is a vehicle. The vehicle includes a communication unit capable of communicating with an allocation control apparatus. The allocation control apparatus that communicates with the communication unit creates a first combination by correlating constant vehicle information and variable vehicle information, creates a second combination by correlating the variable vehicle information and reservation information, and correlates the first combination and the second combination to control vehicle allocation to a subscriber. The constant vehicle information is defined as fixedly given to each of vehicles. The variable vehicle information is defined as variably given to each of the vehicles. The reservation information is defined as associated with the subscriber. The allocation control apparatus that communicates with the communication unit changes the vehicle allocation to the subscriber by revising one of the constant vehicle information and the variable vehicle information contained in the first combination stored in the storage unit to update the first combination while making no changes to the second combination stored in the storage unit.

Any desired combinations of the above described components and modifications of the features of the present disclosure in methods, devices, systems, computer programs, recording media containing the computer programs, or other entities are still effective as other aspects of the present disclosure.

An apparatus according to the present disclosure can efficiently perform vehicle allocation.

### BRIEF DESCRIPTION OF DRAWINGS

FIG. 1 is a diagram illustrating a configuration of a vehicle allocation system according to a first exemplary embodiment of the present invention.
FIG. 2 is a schematic view of a first procedure performed by the vehicle allocation system of FIG. 1.
FIG. 3 is another schematic view of the first procedure performed by the vehicle allocation system of FIG. 1.
FIG. 4 is a diagram illustrating a configuration of the disposition system of FIG. 1.
FIG. 5 is a diagram illustrating a data structure of a database stored in a storage unit in FIG. 4.
FIG. 6 is a flowchart illustrating steps of the first procedure performed by an allocation control apparatus in FIG. 4.
FIG. 7 is a schematic view of a second procedure performed by the vehicle allocation system of FIG. 1.
FIG. 8 is a flowchart illustrating steps of the second procedure performed by the allocation control apparatus in FIG. 4.
FIG. 9 is a schematic view of a third procedure performed by the vehicle allocation system of FIG. 1.
FIG. 10 is a flowchart illustrating steps of the third procedure performed by the allocation control apparatus in FIG. 4.
FIG. 11 is a schematic view of a fourth procedure performed by the vehicle allocation system of FIG. 1.
FIG. 12 is a flowchart illustrating steps of the fourth procedure performed by the allocation control apparatus in FIG. 4.
FIG. 13 is a schematic view of a fifth procedure performed by the vehicle allocation system of FIG. 1.
FIG. 14 is a flowchart illustrating steps of the fifth procedure performed by the allocation control apparatus in FIG. 4.
FIG. 15 is a diagram illustrating a data structure of a database stored in a storage unit according to a second exemplary embodiment of the present invention.
FIG. 16 is a flowchart illustrating steps taken for vehicle allocation by an allocation control apparatus according to the second exemplary embodiment of the present invention.

### DESCRIPTION OF EMBODIMENTS

Prior to describing exemplary embodiments of the present invention, problems found in conventional techniques will now briefly be described herein. When a site where vehicles equipped with autonomous driving devices pick up and drop off passengers (hereinafter referred to as a "station") takes the form of a column at a roadside, these vehicles line up in order of arrival and leave the site from the front of the line in order. In a system like this, if a reserved vehicle is not first in waiting line at a station, the reserved vehicle cannot leave the station unless a vehicle parked in front of the reserved vehicle is moved.

The present disclosure has been made in view of the above-mentioned circumstance and an object of the present disclosure is to provide a technique for efficient vehicle allocation.

### FIRST EXEMPLARY EMBODIMENT

Prior to specifically describing exemplary embodiments of the present invention, an outline of exemplary embodiments will be described herein. A first exemplary embodiment specifies a vehicle allocation service for providing a pickup and drop-off service using vehicles that are each equipped with an autonomous driving function. This service is supposed to be applied to a pickup and drop-off service at a specific site having a wide area, such as a resort facility or a tourist farm, for example. In a pickup and drop-off service offered in a specific site, vehicles may be allocated at different locations within the site and used on demand on an as-needed basis without booking. Alternatively, the service may be available on a reservation basis for allocation of the vehicles at specified times and locations. The present exemplary embodiment describes the latter. Since a pickup and drop-off service using autonomous driving technique comes with no driver in contrast to taxis with drivers, users of the service are required to locate and get on their reserved vehicles without error. In the case of a station where vehicles on standby take the form of a column as described above, since a limit is put on the taking the vehicles out of the station, efficient allocation of the vehicles is required. To fulfill these requirements, the system in this exemplary embodiment performs a procedure described below.

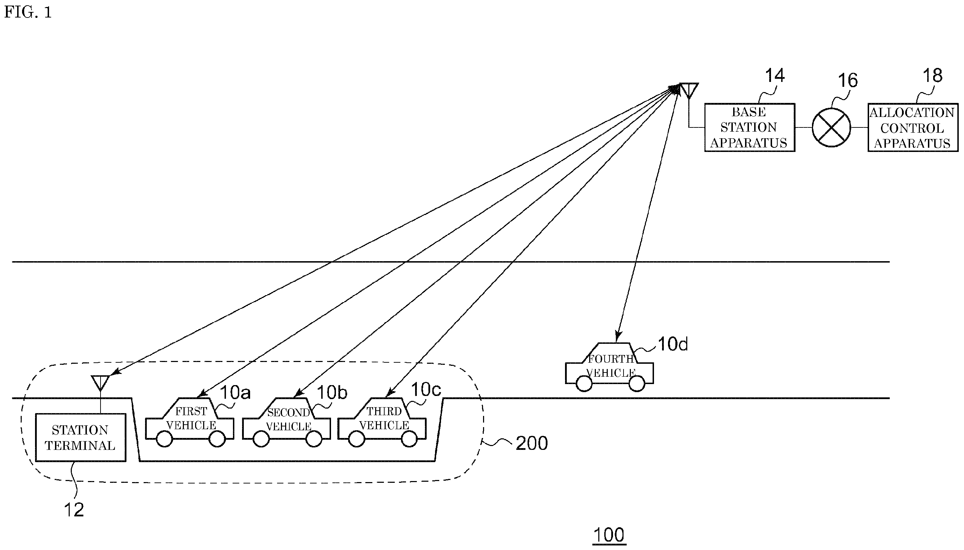

FIG. 1 illustrates a configuration of vehicle allocation system 100 according to the first exemplary embodiment of the present invention. Vehicle allocation system 100 includes first vehicle 10a, second vehicle 10b, third vehicle 10c, and fourth vehicle 10d that are collectively called vehicles 10, as well as station terminal 12, base station apparatus 14, network 16, and allocation control apparatus 18. Station 200 is constructed at a roadside.

Station 200 is constructed at a roadside of a road. Station 200 has a shape that allows parallel parking of a plurality of vehicles 10 (e.g. 3 units). In FIG. 1, vehicles 10 each leave station 200 from a left side of station 200. In FIG. 1, first vehicle 10a leaves the station first. When first vehicle 10a leaves the station, second and third vehicles 10b and 10c advance leftward on station 200. A place where third vehicle 10c was parked is now vacant, and thus fourth vehicle 10d makes an entry into the vacant place. In other words, in FIG. 1, vehicles 10 each enter station 200 from a right side of station 200. In this way, vehicles 10 each enter station 200 from back of the station and leave station 200 from front of the station.

Stations 200 are constructed at different locations within a site. Users access a pickup and drop-off service at stations 200. A number of vehicles 10 allowed for parallel parking may differ from one station 200 to another. Stations 200 are given station information for identification of respective stations 200. Description herein will be focused on one station 200 for the sake of clear description.

Station 200 is provided with station terminal 12. Station terminal 12 is a wireless communication device used by a user who has arrived at station 200. Users are classified into subscribers and non-subscribers. Subscribers are users who reserve the allocation of vehicles 10 through cellular phones, smartphones, or other devices. Through reservation, a combination of station 200 and a time at which the subscriber will get on vehicle 10, the subscriber's name and other information is registered on allocation control apparatus 18. When a reservation has been registered, an identification number for identification of the reservation is given. A general term for these information related to the reservation or at least one of the information related to the reservation are also referred to as "reservation information." Meanwhile, non-subscribers are users who have no reservations registered on allocation control apparatus 18.

Station terminal 12 communicates with allocation control apparatus 18 through base station apparatus 14. A subscriber notifies allocation control apparatus 18 by means of station terminal 12 that the subscriber has arrived at station terminal 12. At that time, the subscriber inputs reservation information into station terminal 12, and station terminal 12 sends the reservation information to allocation control apparatus 18 so that allocation control apparatus 18 identifies the arrival of the subscriber. A non-subscriber, on the other hand, makes a request for use of vehicle 10 to vehicle 10 by means of station terminal 12. This means that a reservation made by the non-subscriber using station terminal 12 gets the non-subscriber to be turned into a subscriber.

Vehicle 10 is a commuter car, i.e. an automobile equipped with an autonomous driving function. In this example, four vehicles 10 are shown. The number of vehicles 10 may be other than four. Vehicle 10 is also equipped with a wireless communication function. Similarly to station terminal 12, vehicle 10 communicates with base station apparatus 14 through the wireless communication function. Upon reception of a vehicle allocation command from allocation control apparatus 18 via base station apparatus 14, vehicle 10 starts autonomous driving in accordance with the received command.

In this exemplary embodiment, two types of vehicle information are defined to identify each vehicle 10. One is constant vehicle information that is fixed and given to each vehicle 10. The constant vehicle information remains unchanged during operation of the pickup and drop-off service. The other is variable vehicle information that is given to each vehicle and variable. The variable vehicle information is supplied by allocation control apparatus 18 and is changed as appropriate during operation of the pickup and drop-off service. Subscribers identify their reserved vehicles by variable vehicle information. Allocation control apparatus 18 notifies a subscriber of variable vehicle information when allocation control apparatus 18 receives a reservation request from the subscriber and registers the reservation. Alternatively, allocation control apparatus 18 notifies a subscriber of variable vehicle information immediately upon reception of reservation information from the subscriber.

Base station apparatus 14 includes a first end through which apparatus 14 communicates with vehicles 10 using the wireless communication function. Base station apparatus 14 is connectable to station terminal 12. Base station apparatus 14 establishes connection with network 16 at a second end. Network 16 is a communication line for connection between base station apparatus 14 and allocation control apparatus 18. Network 16 may be a public network or a dedicated line, for example.

Allocation control apparatus 18 connects with network 16 and communicates with vehicles 10 using the wireless communication function via network 16 and base station apparatus 14. Allocation control apparatus 18 can communicate with station terminal 12. As described above, allocation control apparatus 18 registers a reservation at the time of receiving a notification from a device such as a cellular phone or a smartphone. At the time of registering a subscriber's reservation, allocation control apparatus 18 creates a second combination by correlating variable vehicle information and reservation information of a subscriber.

Allocation control apparatus 18 sends a command to the wireless communication function of vehicle 10 so as to allocate vehicle 10 in response to reservation information. At that time, allocation control apparatus 18 creates a first combination by correlating constant vehicle information and variable vehicle information to manage vehicle 10 subject to allocation. Allocation control apparatus 18 also correlates the first and second combinations having common variable vehicle information and thereby associates the subscriber with vehicle 10. Allocation control apparatus 18 flexibly changes vehicle 10 subject to allocation by changing any one of constant vehicle information and variable vehicle information in the first combination.

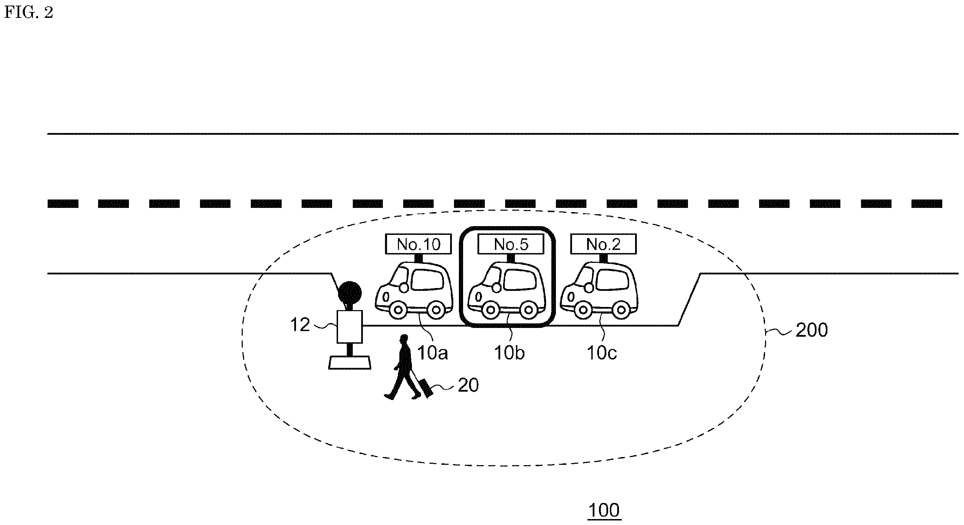

FIG. 2 is a schematic view of a first procedure performed by vehicle allocation system 100. In this drawing, similarly to FIG. 1, a plurality of vehicles 10 are parallel-parked at station 200. First vehicle 10a, second vehicle 10b, and third vehicle 10c are lined up in this order. First, second, and third vehicles 10a, 10b, and 10c are each given constant vehicle information described above. First vehicle 10a is given variable vehicle information "10" while second and third vehicles 10b and 10c are given variable vehicle information "5" and "2" respectively. Vehicles 10 are each equipped with an external display (not illustrated), and the external display shows variable vehicle information. Thus, subscribers and non-subscribers can check variable vehicle information given to vehicles 10 from outside vehicles 10.

Let us assume that the second combination for subscriber 20 has been created at the time of registration of a reservation, and the variable vehicle information in the second combination is "5." As shown in the drawing, variable vehicle information "5" is given to second vehicle 10b and thus the subscriber should get on second vehicle 10b. However, vehicle 10 reserved by the subscriber is unable to leave the station because second vehicle 10b can leave there only after first vehicle 10a has left the station.

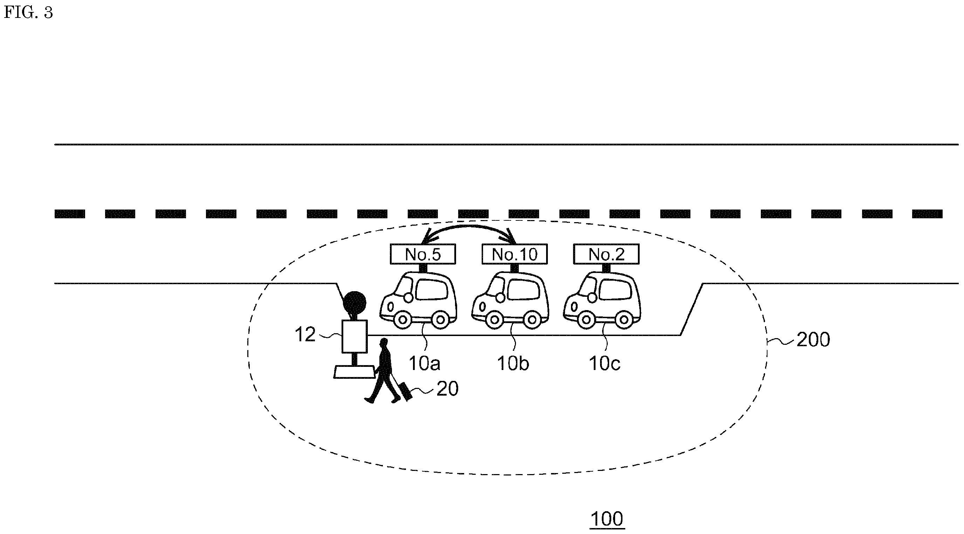

FIG. 3 is another schematic view of the first procedure performed by vehicle allocation system 100. FIG. 3 illustrates a situation following that in FIG. 2. After arriving at station 200, subscriber 20 notifies allocation control apparatus 18 (not illustrated) of the arrival by means of station terminal 12. Upon reception of the notification, allocation control apparatus 18 recognizes that second vehicle 10b reserved by the subscriber cannot leave the station immediately because second vehicle 10b is parked behind first vehicle 10a. Allocation control apparatus 18 exchanges variable vehicle information between the first combination for first vehicle 10a and the first combination for second vehicle 10b. As shown in the drawing, this exchange means that variable vehicle information "5" is given to first vehicle 10a and variable vehicle information "10" is given to second vehicle 10b. Consequently, vehicle 10 reserved by the subscriber comes to the front of the line and is allowed to leave the station immediately. Allocation control apparatus 18 then gets the external display on each vehicle 10 to alter the indication in response to the changed variable vehicle information.

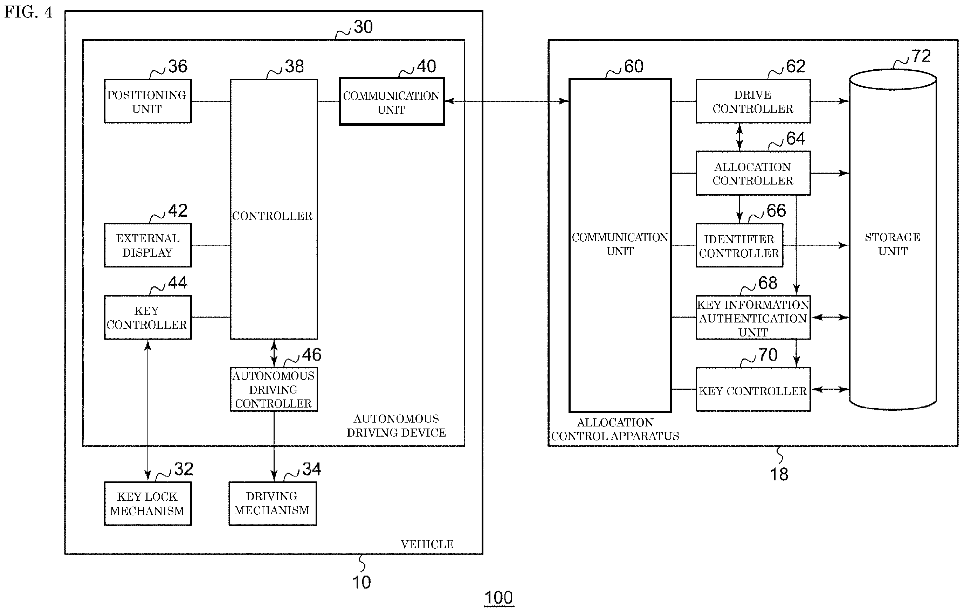

FIG. 4 illustrates a configuration of vehicle allocation system 100. Of vehicle allocation system 100 shown in FIG. 1, FIG. 4 illustrates configurations of vehicle 10 and allocation control apparatus 18, and omits base station apparatus 14 and network 16. Vehicle 10 includes autonomous driving device 30, key lock mechanism 32, and driving mechanism 34. Autonomous driving device 30 includes positioning unit 36, controller 38, communication unit 40, external display 42, key controller 44, and autonomous driving controller 46. Allocation control apparatus 18 includes communication unit 60, drive controller 62, allocation controller 64, identifier controller 66, key information authentication unit 68, key controller 70, and storage unit 72.

Allocation controller 64 creates a first combination by correlating constant vehicle information with variable vehicle information. Allocation controller 64 receives details at the time of registration of a reservation made by a subscriber and produces reservation information, as well as creates a second combination by correlating variable vehicle information with reservation information. A subscriber registers a reservation by making access to allocation controller 64 via communication unit 60 by using a device (not illustrated) such as a cellular phone or a smartphone. Allocation controller 64 correlates the first and second combinations having common variable vehicle information and thus controls the allocation of vehicle 10 to a subscriber. The correlated first and second combinations are also referred to as "paired information." Allocation controller 64 stores details contained in paired information in storage unit 72.

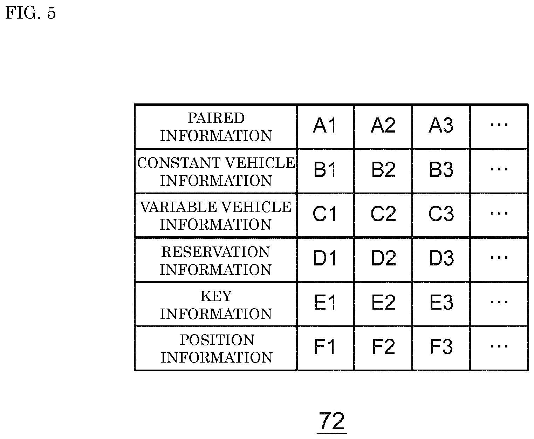

Storage unit 72 is a storage medium that provides storage of digital data, and may be a hard disk, for example. Storage unit 72 stores paired information that includes first and second combinations created by allocation controller 64. FIG. 5 illustrates a data structure of a database stored in storage unit 72. Paired information includes constant vehicle information, variable vehicle information, reservation information, key information, and position information. A combination of constant vehicle information and variable vehicle information corresponds to a first combination, whereas a combination of variable vehicle information and reservation information corresponds to a second combination. Key information and position information will be described later. For example, paired information "A1" contains "B1" to "F1." With reference back to FIG. 4, storage unit 72 also stores geographic information. Geographic information contains at least data about a road constructed on a site where the pickup and drop-off service is provided.

Identifier controller 66 receives a notification from allocation controller 64 at a point of time when allocation controller 64 creates a first combination. Upon reception of the notification, identifier controller 66 acquires a first combination according to the notification from storage unit 72. Identifier controller 66 commands communication unit 60 to send the acquired first combination. In response to the command from identifier controller 66, communication unit 60 sends the first combination to vehicle 10 having constant vehicle information contained in the first combination.

Communication unit 40 of vehicle 10 has the wireless communication function described above and is thus capable of communicating with allocation control apparatus 18. Communication unit 40 receives the first combination from communication unit 60 of allocation control apparatus 18. Communication unit 40 sends the first combination to controller 38. Controller 38 controls the operation of autonomous driving device 30. Upon reception of the first combination from communication unit 40, controller 38 retains variable vehicle information contained in the first combination and commands external display 42 to show the variable vehicle information. External display 42 is a display device such as a monitor for showing information and is disposed at a location visible from outside vehicle 10. In response to the command from controller 38, external display 42 shows the variable vehicle information. This indication enables subscribers to check from outside vehicle 10 whether vehicle 10 is a reserved vehicle.

Positioning unit 36 periodically determines information on the position of vehicle 10 by receiving signals from GPS satellites. The position information may include velocity data. Since determining information on position by means of the GPS is a widely-known technique, description on this technique is omitted. The position of reserved vehicle 26 may be determined by using techniques other than the GPS. Positioning unit 36 sends periodically determined position information to controller 38. Controller 38 receives position information from positioning unit 36 and commands communication unit 40 to send the position information to allocation control apparatus 18. In response to the command from positioning unit 36, communication unit 40 periodically sends the position information to allocation control apparatus 18. At that time, constant vehicle information is attached to the position information to make the source known.

Allocation controller 64 of allocation control apparatus 18 receives the position information about vehicle 10 via communication unit 60. Allocation control apparatus 18 refers to constant vehicle information attached to the position information, and stores the position information in storage unit 72. The stored position information is shown on a position information line in FIG. 5. Position information stored in storage unit 72 is periodically updated owing to periodic input of position information.

In response to commands from allocation controller 64, drive controller 62 produces routes that vehicles 10 have to take. The routes produced by drive controller 62 include two types of routes. One is a route from a position at which vehicle 10 presently exists to station 200. Drive controller 62 produces a route of this type based on position information and geographic information stored in storage unit 72, as well as information on station 200 specified in a command from allocation controller 64. The other is a route from station 200 to a destination. Drive controller 62 produces a route of this type based on position information and geographic information stored in storage unit 72, as well as information on the destination specified in a command from allocation controller 64. Since a technique used to produce these routes is publicly known, description on this technique is omitted. Drive controller 62 sends information on the produced routes (hereinafter referred to as "route information") to vehicle 10 via communication unit 60.

Key information authentication unit 68 receives a command to generate key information from allocation controller 64 when allocation controller 64 registers a reservation. Key information is data used to unlock key lock mechanism 32 provided on vehicle 10 and may be a password, for example. This data is used to prevent users other than a subscriber to vehicle 10 from getting on vehicle 10 concerned. Key information authentication unit 68 gets key information to be included in paired information and to be stored in storage unit 72. Key information authentication unit 68 sends key information to a cellular phone, a smartphone, or any device of a subscriber via communication unit 60.

Key information authentication unit 68 also receives key information from station terminal 12 via communication unit 60 when a subscriber has got on vehicle 10. Vehicle 10 is equipped with an interface for acceptance of key information, and the subscriber enters key information through the interface. Key information authentication unit 68 refers to data stored in storage unit 72 and authenticates the key information. Key information authentication unit 68 verifies whether a piece of key information stored in storage unit 72 agrees with the entered key information, for example. If authentication succeeds, i.e. the key information agrees with each other, key information authentication unit 68 notifies key controller 70 of the successful authentication. Upon reception of the notification from key information authentication unit 68, key controller 70 sends a signal for unlocking the key (hereinafter referred to as an "unlocking signal") to vehicle 10 via communication unit 60.

Upon receiving an unlocking signal from allocation control apparatus 18 via communication unit 40 and controller 38, key controller 44 of vehicle 10 gets key lock mechanism 32 to unlock an electronic key fitted on a door of vehicle 10. Key lock mechanism 32 locks or unlocks the electronic key. As described above, key lock mechanism 32 unlocks the electronic key at the time of receiving an unlocking signal from key controller 44. Key lock mechanism 32 may lock the electronic key after a lapse of a certain period of time following unlocking the electronic key.

Driving mechanism 34 of vehicle 10 includes an engine, gears, brakes, and a steering system for driving vehicle 10. Autonomous driving controller 46 controls driving mechanism 34 and thereby autonomously drives vehicle 10. Upon receiving route information from allocation control apparatus 18 via communication unit 40 and controller 38, autonomous driving controller 46 starts autonomously driving of the vehicle in accordance with the route information. If autonomous driving is not performed by autonomous driving controller 46, driving mechanism 34 drives vehicle 10 in response to an operation by a driver.

If a situation illustrated in FIG. 2 occurs and a notification from station terminal 12 is received, allocation controller 64 in this configuration revises one of constant vehicle information and variable vehicle information contained in first combinations stored in storage unit 72. For example, allocation controller 64 searches data in storage unit 72 and identifies the first combination containing variable vehicle information "5" that a subscriber is notified of. Allocation controller 64 also searches data in storage unit 72 and identifies the first combination containing variable vehicle information "10", based on position information. Then, allocation controller 64 exchanges the variable vehicle information between these first combinations and thus updates the first combinations. Meanwhile, allocation controller 64 makes no changes to the second combinations containing variable vehicle information "5" and "10" respectively, stored in storage unit 72. As a result of this procedure, vehicle 10 subject to allocation for the subscriber is replaced with another vehicle 10.

When the first combinations are revised, allocation controller 64 notifies identifier controller 66 and key information authentication unit 68 of the revision. Key information authentication unit 68 receives a notification from allocation controller 64 at a point of time when allocation controller 64 revises a first combination. Key information authentication unit 68 updates key information stored in storage unit 72 while maintaining relationship between the variable vehicle information and the key information before the revision.

Identifier controller 66 receives a notification from allocation controller 64 at a point of time when allocation controller 64 revises a first combination. Upon reception of the notification, identifier controller 66, as described above, acquires the first combination according to the notification from storage unit 72. Identifier controller 66 commands communication unit 60 to send the acquired first combinations. In response to the command from identifier controller 66, communication unit 60 sends the first combination to vehicle 10 having constant vehicle information contained in the first combination. Consequently, the variable vehicle information shown on external display 42 of each vehicle 10 is revised.

This configuration can be achieved with a computer central processing unit (CPU), memory, and other large scale integration (LSI) in terms of hardware and with a program or an application loaded on memory in terms of software. The drawing herein illustrates functional blocks achieved through coordination of these components. Thus, it will be understood by those skilled in the art that these functional blocks can be achieved in various forms such as hardware alone and combinations of hardware and software.

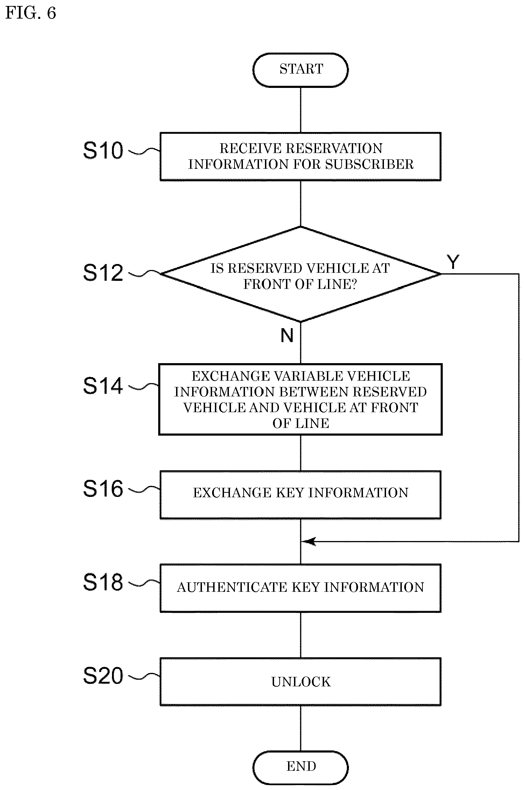

An operation of vehicle allocation system 100 configured as described above will now be described herein. FIG. 6 is a flowchart illustrating steps of the first procedure performed by allocation control apparatus 18. Allocation controller 64 receives reservation information from subscriber 20 (S10). If reserved vehicle 26 is not parked at the front of the line (N in S12), allocation controller 64 exchanges variable vehicle information between reserved vehicle 26 and vehicle 10 at the front of the line (S14). Key information authentication unit 68 exchanges key information (S16). If reserved vehicle 26 is parked at the front of the line (Y in S12), steps 14 and 16 are skipped. Key information authentication unit 68 performs authentication of key information (S18), and key controller 70 performs unlocking (S20).

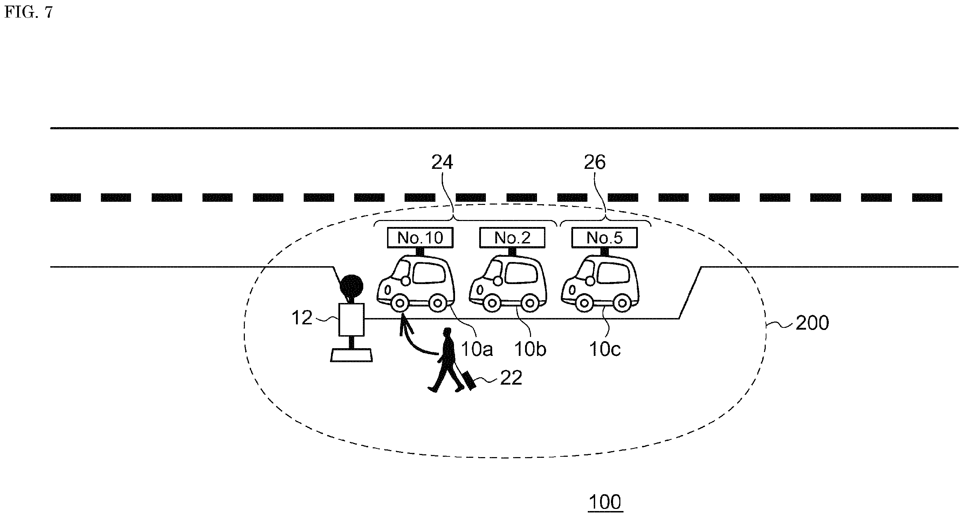

As an example of a procedure performed by vehicle allocation system 100, the first procedure has been described. Second to fifth procedures will now be described one by one to show other examples of procedures performed by vehicle allocation system 100. FIG. 7 is a schematic view of a second procedure performed by vehicle allocation system 100. The second procedure is performed on the assumption that a subscriber and a non-subscriber use identical station 200. As described above, vehicles 10 parallel-parked at station 200 leave the station from the front of the line in order. The non-subscriber should get on unreserved vehicle 10. Thus, if unreserved vehicle 10 is parked behind reserved vehicle 10, the non-subscriber cannot leave the station immediately.

With reference to FIG. 7, the second procedure addresses this situation by achieving a configuration in which, under a circumstance that first vehicle 10a, second vehicle 10b, and third vehicle 10c are parallel-parked in this order, first and second vehicles 10a and 10b are assigned as unreserved vehicles 24, whereas third vehicle 10c is assigned as reserved vehicle 26. In other words, unreserved vehicles 24 get parked in front of reserved vehicle 26. First vehicle 10a is given variable vehicle information "10" while second and third vehicles 10b and 10c are given variable vehicle information "2" and "5" respectively. The second combination for subscriber 20 (not illustrated) contains variable vehicle information "5."

This configuration enables non-subscriber 22 who has arrived at station 200 to get on first vehicle 10a, i.e. unreserved vehicle 24, and leave station 200 immediately. If subscriber 20 (not illustrated) arrives at station 200, subscriber 20 notifies allocation control apparatus 18 (not illustrated) of the arrival by means of station terminal 12. Upon reception of the notification, allocation control apparatus 18 performs a procedure similar to the first procedure and thereby changes the variable vehicle information for first vehicle 10a to "5." In other words, vehicle 10 at the front of the line turns into reserved vehicle 26.

To implement the second procedure described above, allocation control apparatus 18 performs the following procedure. Allocation controller 64 refers to position information and reservation information stored in storage unit 72 and thereby recognizes that unreserved vehicle 24 unassociated with a second combination is parked behind reserved vehicle 26 associated with a second combination. Then, allocation controller 64 exchanges variable vehicle information between the first combination for reserved vehicle 26 and the first combination for unreserved vehicle 24. As a result, reserved vehicle 26 is placed behind unreserved vehicle 24. Similarly to the first procedure, when the first combinations are revised, allocation controller 64 notifies identifier controller 66 and key information authentication unit 68 of the revision.

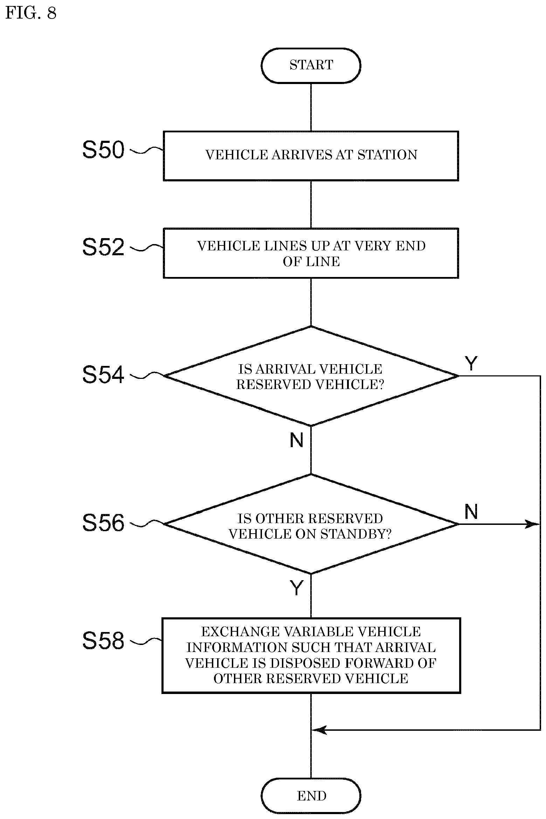

An operation of vehicle allocation system 100 configured as described above will now be described herein. FIG. 8 is a flowchart illustrating steps of the second procedure performed by allocation control apparatus 18. Allocation controller 64 recognizes that vehicle 10 has arrived at station 200 (S50) and lined up at the very end of the line (S52). If vehicle 10 that has arrived is not reserved vehicle 26 (N in S54) and other reserved vehicle 26 is on standby (Y in S56), allocation controller 64 exchanges variable vehicle information such that vehicle 10 that has arrived is placed in front of any other reserved vehicle 26 (S58). If vehicle 10 that has arrived is reserved vehicle 26 (Y in S54), or no reserved vehicle 26 is on standby (N in S56), the procedure comes to an end.

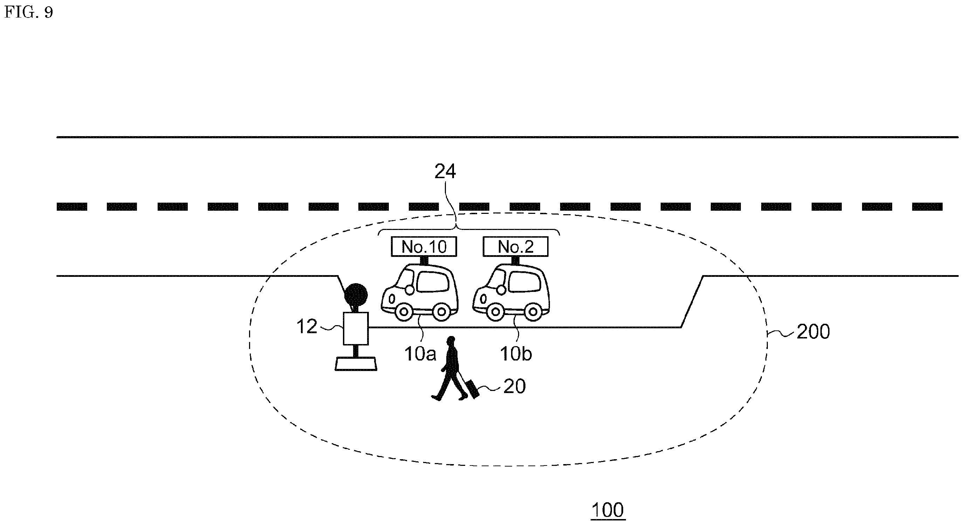

FIG. 9 is a schematic view of a third procedure performed by vehicle allocation system 100. The third procedure is performed on the assumption that subscriber 20 has arrived at station 200 where only unreserved vehicles 10 are parked. In FIG. 9, first vehicle 10a and second vehicle 10b are parallel-parked at station 200 in this order, and both first and second vehicles 10a and 10b are unreserved vehicles 24. First vehicle 10a is given variable vehicle information "10" while second vehicle 10b is given variable vehicle information "2." The second combination for subscriber 20 contains variable vehicle information "5."

In this situation, subscriber 20 who has arrived at station 200 has to await the arrival of reserved vehicle 26 because vehicle 10 reserved by subscriber 20, i.e. reserved vehicle 26, is not parked. This makes subscriber 20 wait despite parked vehicles 10 and thus leads to inefficiency. The third procedure addresses this situation by allowing subscriber 20 who has arrived at station 200 to notify allocation control apparatus 18 (not illustrated) of the arrival through station terminal 12. Upon reception of the notification, allocation control apparatus 18 turns unreserved vehicle 24 parked at station 200 into reserved vehicle 26. In this example, the variable vehicle information for first vehicle 10a is changed from "10" to "5." In other words, vehicle 10 at the front of the line turns into reserved vehicle 26.

To implement the third procedure described above, allocation control apparatus 18 performs the following procedure. Upon reception of a notification from station terminal 12, allocation controller 64 refers to position information and reservation information stored in storage unit 72 and thereby recognizes that only unreserved vehicle 24 is parked at station 200. Unreserved vehicle 24 herein is vehicle 10 provided with a first combination containing second variable vehicle information different from first variable vehicle information that is correlated with reservation information in a second combination for subscriber 20. In the case of FIG. 9, the first variable vehicle information is "5" while the second variable vehicle information is "10" and "2," and particularly corresponds to "10." Allocation controller 64 revises second variable vehicle information contained in the first combination to first variable vehicle information. As a result, reserved vehicle 26 is allocated to station 200. Similarly to the first procedure, when the first combinations are revised, allocation controller 64 notifies identifier controller 66 and key information authentication unit 68 of the revision.

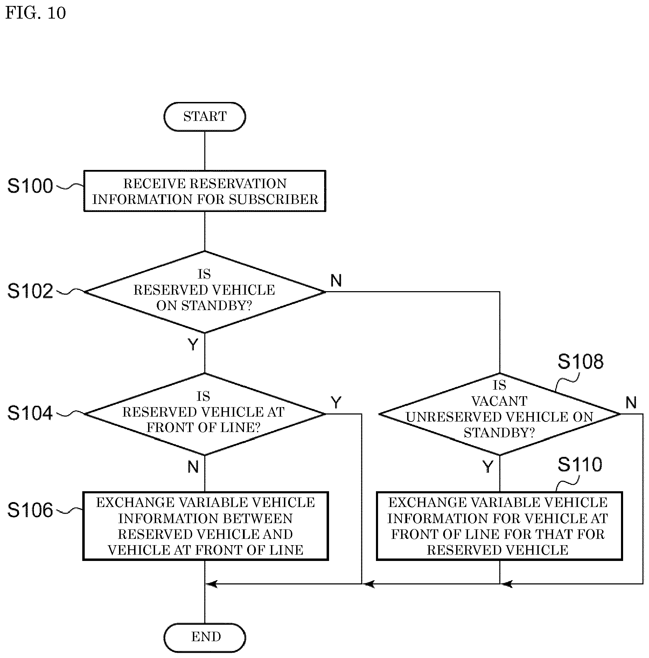

An operation of vehicle allocation system 100 configured as described above will now be described herein. FIG. 10 is a flowchart illustrating steps of the third procedure performed by allocation control apparatus 18. Allocation controller 64 receives reservation information from subscriber 20 (S100). If reserved vehicle 26 is on standby (Y in S102) and is not parked at the front of the line (N in S104), allocation controller 64 exchanges variable vehicle information between reserved vehicle 26 and vehicle 10 at the front of the line (S106). If reserved vehicle 26 is parked at the front of the line (Y in S104), step 106 is skipped. If reserved vehicle 26 is not on standby (N in S102) and vacant unreserved vehicle 10 is on standby (Y in S108), allocation controller 64 exchanges the variable vehicle information for vehicle 10 at the front of the line for the variable vehicle information for the reserved vehicle (S110). If no vacant unreserved vehicle 10 is on standby (N in S108), step 110 is skipped.

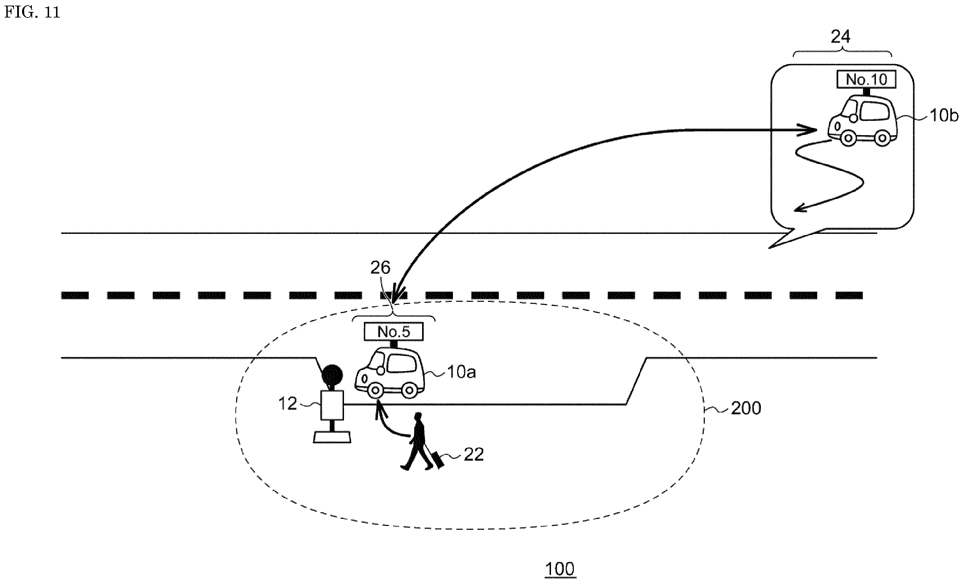

FIG. 11 is a schematic view of a fourth procedure performed by vehicle allocation system 100. The fourth procedure is performed on the assumption that non-subscriber 22 has arrived at station 200 where only reserved vehicle 10 is parked. In FIG. 11, first vehicle 10a, i.e. reserved vehicle 26, is parked at station 200 and second vehicle 10b, i.e. unreserved vehicle 24, is traveling. First vehicle 10a is given variable vehicle information "5" while second vehicle 10b is given variable vehicle information "10." The second combination for subscriber 20 (not illustrated) contains variable vehicle information "5."

In this situation, non-subscriber 22 who has arrived at station 200 has to await the arrival of unreserved vehicle 24 because unreserved vehicle 24 is not parked. This makes non-subscriber 22 wait despite parked vehicle 10 and leads to inefficiency. The fourth procedure addresses this situation by allowing non-subscriber 22 who has arrived at station 200 to make a request to allocation control apparatus 18 (not illustrated) through station terminal 12 for use of vehicle 10. The request for use of vehicle 10 is equivalent to a combination of registration of a reservation and notification of arrival at station 200.

Upon reception of the request, allocation control apparatus 18 determines whether traveling unreserved vehicle 24 can arrive at station 200 by the time appointed for reserved vehicle 26 parked at station 200. If the arrival is achievable, allocation control apparatus 18 changes reserved vehicle 26 parked at station 200 to unreserved vehicle 24, and changes traveling unreserved vehicle 24 to reserved vehicle 26. Allocation control apparatus 18 notifies non-subscriber 22 of a second combination containing variable vehicle information for changed unreserved vehicle 24. In this example, the variable vehicle information for first vehicle 10a is changed from "5" to "10" whereas the variable vehicle information for second vehicle 10b is changed from "10" to "5." The variable vehicle information contained in the second combination that non-subscriber 22 is notified of is 10."

To implement the fourth procedure described above, allocation control apparatus 18 performs the following procedure. Upon reception of a request, i.e. information about a reservation made by non-subscriber 22, from station terminal 12, allocation controller 64 refers to position information and reservation information stored in storage unit 72 and thereby recognizes that only reserved vehicle 26 is parked at station 200. Allocation controller 64 also recognizes that traveling unreserved vehicle 24 can arrive at station 200 by the time appointed for reserved vehicle 26. In the case of FIG. 11, the first variable vehicle information is "5" while the second variable vehicle information is "10." Allocation controller 64 exchanges variable vehicle information between the first combination for first vehicle 10a and the first combination for second vehicle 10b.

Allocation controller 64 creates a new second combination by correlating the post-exchange variable vehicle information contained in the first combination for first vehicle 10a with the reservation information for non-subscriber 22. Paired information is formed by the new second combination and the first combination for first vehicle 10a. As a result, unreserved vehicle 24 is allocated to station 200. Similarly to the first procedure, when the first combinations are revised, allocation controller 64 notifies identifier controller 66 and key information authentication unit 68 of the revision. Allocation controller 64 sends the new second combination to a cellular phone, a smartphone, or any device of non-subscriber 22. Drive controller 62 notifies second vehicle 10b of a route to station 200.

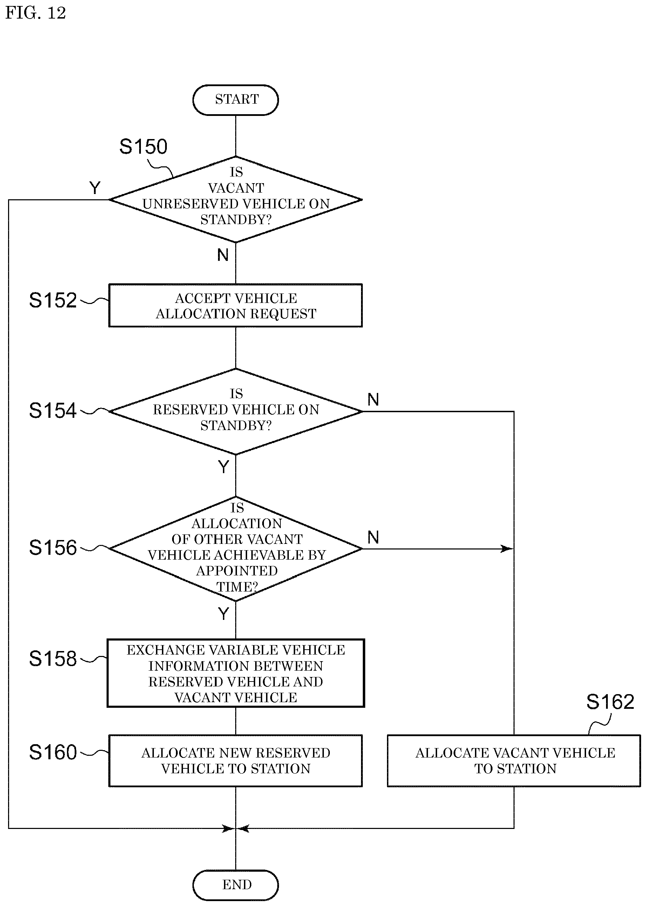

An operation of vehicle allocation system 100 configured as described above will now be described herein. FIG. 12 is a flowchart illustrating steps of the fourth procedure performed by allocation control apparatus 18. If vacant unreserved vehicle 10 is not on standby (N in S150), allocation controller 64 accepts a request for vehicle allocation (S152). If reserved vehicle 26 is on standby (Y in S154) and allocation of other vacant vehicle 10 is achievable by the appointed time (Y in S156), allocation controller 64 exchanges variable vehicle information between reserved vehicle 26 and other vacant vehicle 10 (S158). Allocation controller 64 allocates new reserved vehicle 26 to station 200 (S160). If no reserved vehicle 26 is on standby (N in S154) or allocation of other vacant vehicle 10 is unachievable by the appointed time (N in S156), allocation controller 64 allocates vacant vehicle 10 to station 200 (S162). If vacant unreserved vehicle 10 is on standby (Y in S150), the procedure comes to an end.

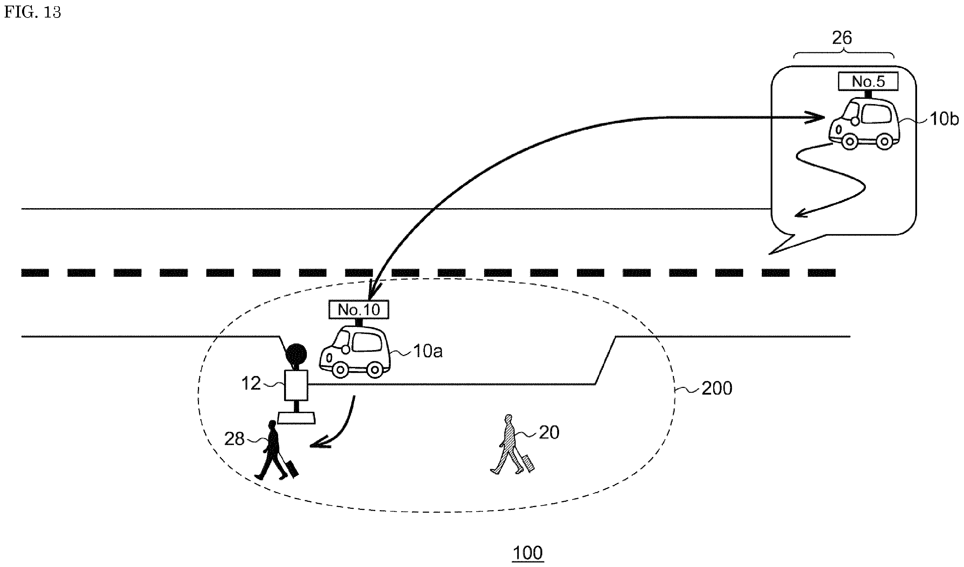

FIG. 13 is a schematic view of a fifth procedure performed by vehicle allocation system 100. The fifth procedure is performed on the assumption that before reserved vehicle 10 arrives at station 200, other vehicle 10 has arrived at station 200 and let user 28 get off the vehicle. This situation is equivalent to a case where vehicle 10 has arrived at station 200 and got unoccupied. In FIG. 11, first vehicle 10a has arrived at station 200 and got unoccupied, whereas second vehicle 10b, i.e. reserved vehicle 26, is traveling. First vehicle 10a is given variable vehicle information "10" while second vehicle 10b is given variable vehicle information "5." The second combination for subscriber 20 contains variable vehicle information "5."

In this situation, if subscriber 20 who has arrived at station 200 is allowed to get on vacant vehicle 10, the time that subscriber 20 waits for a vehicle is shortened. However, subscriber 20 cannot determine whether subscriber 20 is permitted to get on vehicle 10 concerned because the variable vehicle information shown on vehicle 10 differs from the variable vehicle information contained in the second combination for subscriber 20. The third procedure addresses this situation by allowing subscriber 20 who has arrived at station 200 to notify allocation control apparatus 18 (not illustrated) of the arrival through station terminal 12. Upon reception of the notification, allocation control apparatus 18 exchanges variable vehicle information between vacant vehicle 10 that has arrived at station 200 and reserved vehicle 26. In this example, the variable vehicle information for first vehicle 10a is changed from "10" to "5" whereas the variable vehicle information for second vehicle 10b is changed from "5" to "10."

To implement the fifth procedure described above, allocation control apparatus 18 performs the following procedure. Upon reception of a notification from station terminal 12, allocation controller 64 refers to position information and reservation information stored in storage unit 72 and thereby recognizes that vacant vehicle 10 is parked at station 200 and reserved vehicle 26 is traveling and heading for station 200. Vacant vehicle 10 is vehicle 10 unassociated with the second combination for subscriber 20, whereas reserved vehicle 26 is vehicle 10 associated with the second combination for subscriber 20. Allocation controller 64 exchanges variable vehicle information between the first combination for first vehicle 10a and the first combination for second vehicle 10b. Similarly to the first procedure, when the first combinations are revised, allocation controller 64 notifies identifier controller 66 and key information authentication unit 68 of the revision.

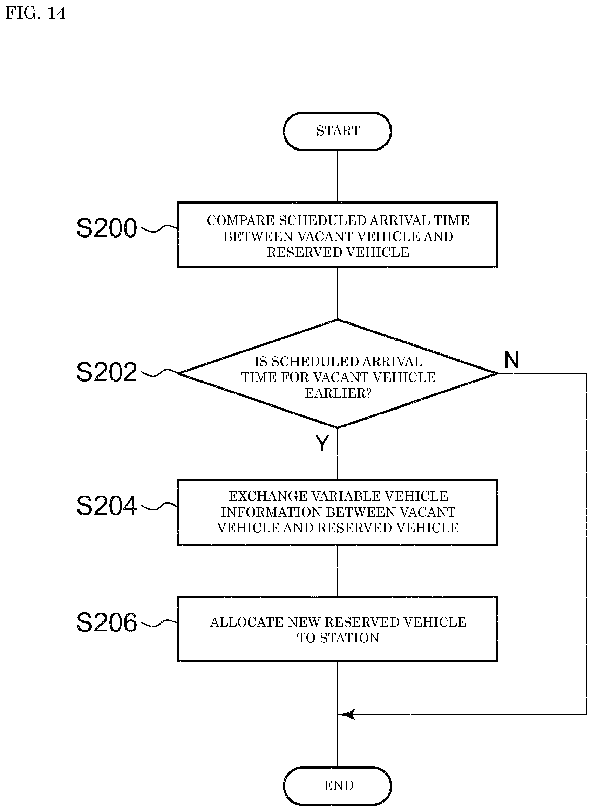

An operation of vehicle allocation system 100 configured as described above will now be described herein. FIG. 14 is a flowchart illustrating steps of the fifth procedure performed by allocation control apparatus 18. Allocation controller 64 compares scheduled arrival time between vacant vehicle 10 and reserved vehicle 26 (S200). If the scheduled arrival time for vacant vehicle 10 is earlier (Y in S202), allocation controller 64 exchanges variable vehicle information between vacant vehicle 10 and reserved vehicle 26 (S204). Allocation controller 64 allocates new reserved vehicle 26 to station 200 (S206). If the scheduled arrival time for vacant vehicle 10 is not earlier (N in S202), steps 204 and 206 are skipped.

According to the present exemplary embodiment, a vehicle subject to allocation for a subscriber can be readily changed by revising a first combination without changing a second combination. Since a vehicle subject to allocation for a subscriber can be readily changed, allocation of vehicles can be done efficiently. Since a reserved vehicle is placed at the front of a line, labor in moving the vehicle can be saved. Since a reserved vehicle is placed at the front of a line, a time in moving the vehicle can be saved. Since vehicles can be parallel-parked close to each other, parking space can be saved. When a vehicle key is unlocked through authentication of a subscriber, since key information is updated in response to a change made to a first combination, the subscriber can unlock the key. Since the subscriber unlocks the key, non-subscribers can be prevented from erroneously getting on the vehicle. Since communication with an allocation control apparatus is performed, a vehicle can be allocated in response to a command from the allocation control apparatus.

Since a reserved vehicle is placed at the rear of a line and an unreserved vehicle is placed in front of the reserved vehicle, a non-subscriber can get on a vehicle and leave a station immediately. Since a reserved vehicle is placed at the rear of a line and an unreserved vehicle is placed in front of the reserved vehicle, non-subscribers can be prevented from erroneously getting on the reserved vehicle. When another reservation is received and an unreserved vehicle is allocated to another location, since the vehicle at the front of a line goes toward the location, vehicle allocation can be performed efficiently. Even when an unreserved vehicle is parked at a station, since the unreserved vehicle is changed to a reserved vehicle, a subscriber can get on the reserved vehicle and leave the station immediately. Since the vehicle carrying the subscriber can leave the station immediately, the time that the subscriber waits for a vehicle can be shortened. Since the vehicle carrying the subscriber can leave the station immediately, efficiency in use of vehicles can be improved.

Even when a reserved vehicle is parked at a station and an unreserved vehicle is traveling, since the reserved vehicle is exchanged for the unreserved vehicle, the time that a non-subscriber waits at the station is shortened. Even when a reserved vehicle is parked at a station and an unreserved vehicle is traveling, since the reserved vehicle is exchanged for the unreserved vehicle, efficiency in use of vehicles is improved. Even when an unreserved vehicle is parked at a station and a reserved vehicle is traveling, since the unreserved vehicle is exchanged for the reserved vehicle, the time that a subscriber waits at the station is shortened. Since subscribers can identify reserved vehicles, convenience to users can be improved.

### SECOND EXEMPLARY EMBODIMENT

A second exemplary embodiment will now be described. Similarly to the first exemplary embodiment, the second exemplary embodiment relates to an allocation control apparatus that controls allocation of vehicles in a vehicle allocation service for providing a pickup and drop-off service using vehicles that are each equipped with an autonomous driving function. The second exemplary embodiment assumes that the vehicles are electrically driven vehicles. Thus, the allocation control apparatus controls allocation of vehicles equipped with batteries in consideration of remaining battery levels as well. Vehicle allocation system 100, vehicle 10, and allocation control apparatus 18 according to the second exemplary embodiment are similar to corresponding components in FIGS. 1 and 4. The following description is primarily given on discrepancies between the first and second exemplary embodiments.

With reference to FIG. 4, controller 38 of vehicle 10 acquires a remaining level of a battery provided on vehicle 10. Since a technique used to acquire remaining battery levels is publicly known, description on the technology is omitted. Controller 38 sends data about a remaining battery level to allocation control apparatus 18 via communication unit 40. Allocation controller 64 of allocation control apparatus 18 acquires the remaining battery level from vehicle 10 via communication unit 60. Allocation controller 64 stores the remaining battery level in storage unit 72.

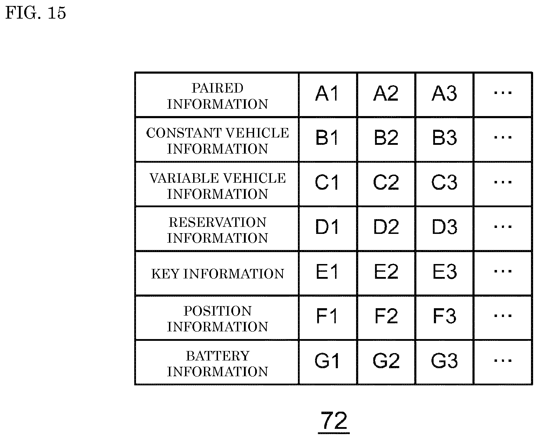

FIG. 15 illustrates a data structure of a database stored in storage unit 72 according to the second exemplary embodiment of the present invention. The data structure in FIG. 15 is similar to that in FIG. 5 except for additional battery information. Battery information is equivalent to battery levels. With reference back to FIG. 4, Allocation controller 64 controls allocation of vehicle 10 as in the first exemplary embodiment. At the same time, allocation controller 64 acquires a remaining level of the battery on vehicle 10 subject to allocation from storage unit 72. When a remaining battery level of reserved vehicle 26 is lower than a threshold, allocation controller 64 exchanges variable vehicle information contained in a first combination for reserved vehicle 26 for variable vehicle information given to other vehicle 10 showing a remaining battery level greater than or equal to the threshold. Reserved vehicle 26 herein is vehicle 10 provided with a first combination containing variable vehicle information correlated with reservation information for subscriber 20. A procedure similar to that described above is performed after the first combinations are revised through exchange.

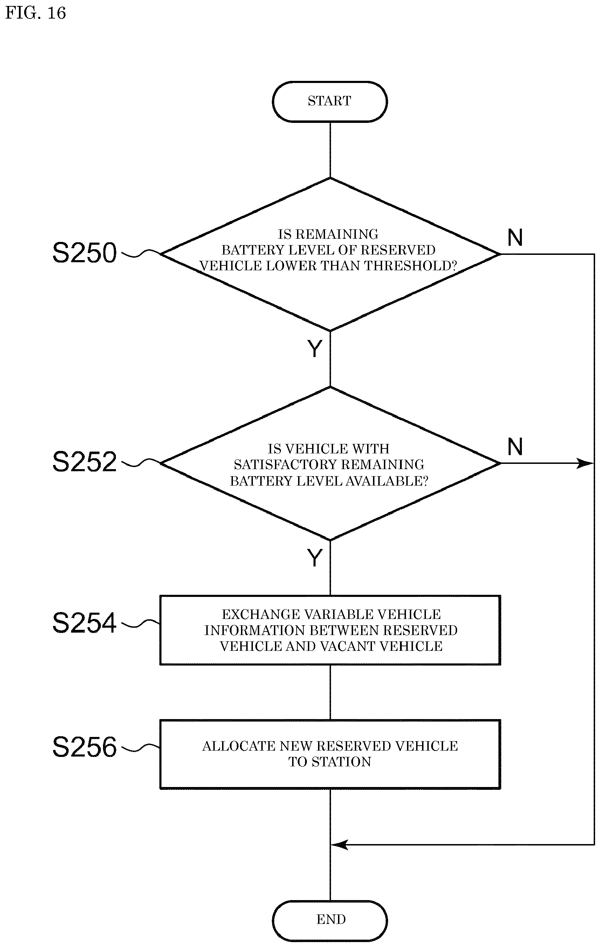

FIG. 16 is a flowchart illustrating steps taken for vehicle allocation by allocation control apparatus 18 according to the second exemplary embodiment of the present invention. If the remaining battery level of reserved vehicle 26 is lower than the threshold (Y in S250) and vehicle 10 with a satisfactory remaining battery level is available (Y in S252), allocation controller 64 exchanges variable vehicle information between reserved vehicle 26 and vacant vehicle 10 (S254). Allocation controller 64 allocates new reserved vehicle 26 to station 200 (S256). If the remaining battery level of reserved vehicle 26 is not lower than the threshold (N in S250) or no vehicle 10 with a satisfactory remaining battery level is available (N in S252), steps 254 and 256 are skipped.

According to this exemplary embodiment, since variable vehicle information between a vehicle with a remaining battery level lower than a threshold and a vehicle with a remaining battery level greater than or equal to the threshold is exchanged, a vehicle with a remaining battery level greater than or equal to the threshold can be allocated. Since variable vehicle information between a vehicle with a remaining battery level lower than the threshold and a vehicle with a remaining battery level greater than or equal to the threshold is exchanged, vehicle allocation management in consideration of remaining battery levels of vehicles can be performed.

The exemplary embodiments of the present invention have been described. It will be understood by those skilled in the art that these exemplary embodiments are merely examples, other exemplary modifications in which components and/or processes of the exemplary embodiments are variously combined are possible, and the other exemplary modifications still fall within the scope of the present invention.

An aspect of the present invention is summarized below. An allocation control apparatus according to an aspect of the present invention includes an allocation controller and a storage unit. The allocation controller creates a first combination by correlating constant vehicle information and variable vehicle information, creates a second combination by correlating the variable vehicle information and reservation information, and correlates the first combination and the second combination to control vehicle allocation to a subscriber. The constant vehicle information is defined as fixedly given to each of vehicles. The variable vehicle information is defined as variably given to each of the vehicles. The reservation information is defined as associated with the subscriber. The storage unit stores the first combination and the second combination created by the allocation controller. The allocation controller changes the vehicle allocation to the subscriber by revising one of the constant vehicle information and the variable vehicle information contained in the first combination stored in the storage unit to update the first combination while making no changes to the second combination stored in the storage unit.

The allocation control apparatus according to the aspect of the present invention can readily change the vehicle subject to allocation for the subscriber by revising the first combination without changing the second combination.

When a second vehicle unassociated with the second combination is parked behind a first vehicle associated with the second combination, the allocation controller may exchange the variable vehicle information between the first combination for the first vehicle and the first combination for the second vehicle. This action disposes a reserved vehicle at the rear of a line and thus enables a non-subscriber to get on a vehicle and leave a station immediately.

When a vehicle provided with the first combination containing second variable vehicle information different from first variable vehicle information that is correlated with the reservation information in the second combination for the subscriber is parked, the allocation controller may revise the second variable vehicle information contained in the first combination to the first variable vehicle information. This action changes a parked unreserved vehicle to a reserved vehicle and thus enables a subscriber to get on a vehicle and leave a station immediately.

When a first vehicle associated with the second combination is parked and a second vehicle unassociated with the second combination is traveling, the allocation controller, upon reception of reservation information for a non-subscriber, may exchange the variable vehicle information between the first combination for the first vehicle and the first combination for the second vehicle and create a new second combination by correlating the post-exchange variable vehicle information contained in the first combination for the first vehicle with the reservation information for the non-subscriber. This action exchanges a reserved vehicle for an unreserved vehicle even if the reserved vehicle is parked at a station and the unreserved vehicle is traveling, and thus shortens the time that a non-subscriber waits at the station.

When a first vehicle unassociated with the second combination is parked and a second vehicle associated with the second combination is traveling, the allocation controller may exchange the variable vehicle information between the first combination for the first vehicle and the first combination for the second vehicle. This action exchanges an unreserved vehicle for a reserved vehicle even if the unreserved vehicle is parked at a station and the reserved vehicle is traveling, and thus shortens the time that a subscriber waits at the station.

When a first vehicle is given the first combination containing the variable vehicle information correlated with the reservation information for the subscriber and a remaining battery level of the first vehicle is lower than a threshold, the allocation controller may exchange the variable vehicle information contained in the first combination for the first vehicle for the variable vehicle information given to a second vehicle showing a remaining battery level greater than or equal to the threshold. This action exchanges the variable vehicle information between the first vehicle with a remaining battery level lower than the threshold and the second vehicle with a remaining battery level greater than or equal to the threshold, and thus allows the allocation of the second vehicle.

Another aspect of the present invention is a vehicle. The vehicle includes a communication unit capable of communicating with an allocation control apparatus. The allocation control apparatus that communicates with the communication unit creates a first combination by correlating constant vehicle information and variable vehicle information, creates a second combination by correlating the variable vehicle information and reservation information, and correlates the first combination and the second combination to control vehicle allocation to a subscriber. The constant vehicle information is defined as fixedly given to each of vehicles. The variable vehicle information is defined as variably given to each of the vehicles. The reservation information is defined as associated with the subscriber. The allocation control apparatus that communicates with the communication unit changes the vehicle allocation to the subscriber by revising one of the constant vehicle information and the variable vehicle information contained in the first combination stored in the storage unit to update the first combination while making no changes to the second combination stored in the storage unit.

According to the aspect of the present invention, the vehicle communicates with the allocation control apparatus and thus can perform a procedure in response to a command from the allocation control apparatus.

### INDUSTRIAL APPLICABILITY

The present invention can be applied to the vehicle allocation control technique.

### REFERENCE MARKS IN THE DRAWINGS

- 10: vehicle
- 12: station terminal
- 14: base station apparatus
- 16: network
- 18: allocation control apparatus
- 20: subscriber
- 22: non-subscriber
- 24: unreserved vehicle
- 26: reserved vehicle
- 28: user
- 30: autonomous driving device
- 32: key lock mechanism
- 34: driving mechanism
- 36: positioning unit
- 38: controller
- 40: communication unit
- 42: external display
- 44: key controller
- 46: autonomous driving controller
- 60: communication unit
- 62: drive controller
- 64: allocation controller
- 66: identifier controller
- 68: key information authentication unit
- 70: key controller
- 72: storage unit
- 100: vehicle allocation system
- 200: station

## Claims

1. An allocation control apparatus comprising:
an allocation controller that creates a first combination by correlating constant vehicle information and variable vehicle information, creates a second combination by correlating the variable vehicle information and reservation information, and correlates the first combination and the second combination to control vehicle allocation to a subscriber, the constant vehicle information being defined as fixedly given to each of vehicles, the variable vehicle information being defined as variably given to each of the vehicles, the reservation information being defined as associated with the subscriber; and
a storage unit that stores the first combination and the second combination created by the allocation controller,
wherein
the allocation controller changes the vehicle allocation to the subscriber by revising one of the constant vehicle information and the variable vehicle information contained in the first combination stored in the storage unit to update the first combination while making no changes to the second combination stored in the storage unit.

2. The allocation control apparatus according to claim 1, wherein when a second vehicle unassociated with the second combination is parked behind a first vehicle associated with the second combination, the allocation controller exchanges the variable vehicle information between the first combination for the first vehicle and the first combination for the second vehicle.

3. The allocation control apparatus according to claim 1, wherein when a vehicle provided with the first combination containing second variable vehicle information different from first variable vehicle information that is correlated with the reservation information in the second combination for the subscriber is parked, the allocation controller revises the second variable vehicle information contained in the first combination to the first variable vehicle information.

4. The allocation control apparatus according to claim 1, wherein when a first vehicle associated with the second combination is parked and a second vehicle unassociated with the second combination is traveling, the allocation controller, upon reception of reservation information for a non-subscriber, exchanges the variable vehicle information between the first combination for the first vehicle and the first combination for the second vehicle and creates a new second combination by correlating a post-exchange variable vehicle information contained in the first combination for the first vehicle with the reservation information for the non-subscriber.

5. The allocation control apparatus according to claim 1, wherein when a first vehicle unassociated with the second combination is parked and a second vehicle associated with the second combination is traveling, the allocation controller exchanges the variable vehicle information between the first combination for the first vehicle and the first combination for the second vehicle.

6. The allocation control apparatus according to claim 1, wherein when a first vehicle is given the first combination containing the variable vehicle information correlated with the reservation information for the subscriber and a remaining battery level of the first vehicle is lower than a threshold, the allocation controller exchanges the variable vehicle information contained in the first combination given to the first vehicle for the variable vehicle information given to a second vehicle showing a remaining battery level greater than or equal to the threshold.

7. A vehicle comprising a communication unit capable of communicating with an allocation control apparatus,
wherein
the allocation control apparatus that communicates with the communication unit creates a first combination by correlating constant vehicle information and variable vehicle information, creates a second combination by correlating the variable vehicle information and reservation information, and correlates the first combination and the second combination to control vehicle allocation to a subscriber, the constant vehicle information being defined as fixedly given to each of vehicles, the variable vehicle information being defined as variably given to each of the vehicles, the reservation information being defined as associated with the subscriber, and
the allocation control apparatus that communicates with the communication unit changes the vehicle allocation to the subscriber by revising one of the constant vehicle information and the variable vehicle information contained in the first combination stored in the storage unit to update the first combination while making no changes to the second combination stored in the storage unit.
